# EUROPEAN PATENT SPECIFICATION

(11) **EP 1 748 052 B1**
(45) Date of publication and mention of the grant of the patent: **09.05.2012**
(21) Application number: 05736733.6
(22) Date of filing: 28.04.2005
(51) Int. Cl.: C08F 12/06, B60C 1/00, C08L 9/00, C08L 25/02, C08F 12/08, C08F 112/08, C08F 212/08

(54) **STYRENE POLYMER, STYRENE COPOLYMER, RUBBER COMPOSITION, AND PNEUMATIC TIRE**
STYROLPOLYMER, STYROLCOPOLYMER, KAUTSCHUKZUSAMMENSETZUNG UND LUFTREIFEN
POLYMÈRE STYRÈNE, COPOLYMÈRE STYRÈNE, COMPOSITION CAOUTCHOUTÉE ET PNEUMATIQUE

(30) Priority: 17.05.2004 JP 2004146468
(43) Date of publication of application: 31.01.2007
(73) Proprietor: Bridgestone Corporation, Tokyo 104-8340 (JP)
(72) Inventor: MASAKI, Koji, c/o BRIDGESTONE CORPORATION, Kodaira-shi, Tokyo 187-8531 (JP); MORI, Noriko, c/o BRIDGESTONE CORPORATION, Kodaira-shi, Tokyo 187-8531 (JP)
(74) Representative: Oxley, Robin John George
(86) International application number: PCT/JP2005/008214
(87) International publication number: WO 2005/111096

(56) References cited:
- EP-A1- 0 422 495
- GB-A- 2 119 388
- JP-A- 10 195 238
- JP-A- 10 195 242
- JP-A- 57 104 405
- JP-A- 58 013 641
- JP-A- 58 167 632
- US-A- 5 376 406

## Description

This invention relates to a rubber composition for a tire comprising a styrene-based polymer and a pneumatic tire using such a rubber composition, and more particularly to a rubber composition capable of improving the steering stability of a tire while ensuring fracture resistance such as wear resistance or the like when it is used in a tire tread.

Recently, an improved steering stability is required as a tire performance with the advance of engine performances in a passenger car. Particularly, it becomes an important issue to ensure the steering stability on a dry road surface as a performance required in a high-performance tire. Heretofore, various techniques are developed for satisfying the requirement of the improvement of the steering stability in these tires. In the development of rubber compositions for a tire tread directly contributing to the improvement of the steering stability of the tire, it is commonly effective to use loss tangent (tan δ) at a temperature above room temperature as an index. Concretely, the steering stability of the tire can be improved by using a rubber composition having a high tan δ above room temperature in the tread.

As a method of increasing tan δ of the rubber composition there have hitherto been known a technique wherein a C₉ aromatic resin having a high glass transition point (Tg) is compounded into a rubber composition (see JP-A-H05-9338) and a technique wherein a liquid styrene-butadiene copolymer having molecular weight of several tens of thousands is compounded into a rubber composition (see JP-A-S61-203145). However, when the resin having the high glass transition point is compounded into the rubber composition, since the molecular weight of the resin is low, there is a problem that fracture characteristics of the rubber composition are deteriorated. Moreover, when the liquid styrene-butadiene copolymer is compounded into the rubber composition, since the glass transition point of the liquid copolymer is low, there is a problem that the tan δ of the rubber composition cannot be sufficiently improved.

On the other hand, it is an important issue to ensure the wear performance of the tire in view of economical efficiency. Also, when an additive such the resin, the liquid polymer or the like is compounded for improving the tan δ of the rubber composition, the additive to be compounded must have a sufficiently good compatibility with a rubber component in view of ensuring the fracture characteristics of the tire sufficiently.

It is, therefore, an object of the invention to solve the above-mentioned problems of the conventional techniques and to provide a rubber composition capable of highly improving the steering stability of the tire while ensuring the fracture resistance. Also, it is another object of the invention to provide a styrene-based polymer capable of improving the tan δ of the rubber composition while ensuring the fracture resistance of the rubber composition by adding to the rubber composition. Furthermore, it is the object of the invention to provide a pneumatic tire using the rubber composition in the tread, in which the steering stability and the fracture resistance such as wear resistance or the like are highly established.

The inventors have made various studies in order to achieve the above objects and discovered that the tan δ of the rubber composition can be highly improved but also the fracture resistance of the rubber composition can be ensured by compounding a styrene-based polymer having a good compatibility with a rubber component, a high glass transition point and a relatively high molecular weight into the rubber composition, and the steering stability of the tire can be highly improved while ensuring the fracture resistance sufficiently by using the above rubber composition in the tread, and as a result the invention has been accomplished.
Attention is also drawn to the disclosure of EP-0422495A, GB-2119388A, JP-10-195238A, JP-10-195242A, JP-58-013641A, JP-58-167632A, JP-57-104405A and US-5376406A.
The present invention provides a rubber composition for a tread for a tire comprising 5 to 150 parts by mass of a styrene-based polymer obtained by homopolymerizing a styrene derivative through an anionic polymerization based on 100 parts by mass of a rubber component composed of a diene-based rubber, characterized in that the styrene-based polymer has a weight average molecular weight as converted to polystyrene of 2x10³ to 50x10³, and the styrene derivative has an alkyl group having a carbon number of 1 to 12 as a substituent in a benzene ring.

That is, the styrene-based polymer used in the invention is a styrene-based polymer obtained by homopolymerizing a styrene derivative, and is characterized in that a weight average molecular weight as converted to polystyrene is 2×10³ to 50×10³. The term "styrene derivative" used herein means ones obtained by substituting a hydrogen in a styrene molecule with a monovalent substituent, and comprises the substitution of a hydrogen in a benzene ring of the styrene molecule. The styrene derivative is preferable to be a derivative obtained through the substitution of the hydrogen in the benzene ring of the styrene molecule and is preferably a derivative having a substituent at a para-position against the vinyl group. The monovalent substituent is an alkyl group.

According to the invention, the styrene derivative has an alkyl group having a carbon number of 1 to 12 as a substituent in the benzene ring. Moreover, of the styrene derivatives preferably has an alkyl group having a carbon number of 1 to 8, and particularly preferably has tert-butyl group as a substituent in the benzene ring.

Also, the rubber composition according to the invention is characterized by comprising 5 to 150 parts by mass of the above styrene-based polymer based on 100 parts by mass of a rubber component composed of a diene-based rubber.

In a preferable embodiment of the rubber composition according to the invention, the rubber component comprises a copolymer of a conjugated diene compound and an aromatic vinyl compound having a weight average molecular weight as converted to polystyrene of 300×10³ to 3,000×10³. Moreover, a styrene-butadiene copolymer rubber (SBR) is preferable as the copolymer of the conjugated diene compound and the aromatic vinyl compound.

The rubber composition according to the invention preferably comprises 10 to 200 parts by mass of a styrene-butadiene copolymer having a weight average molecular weight as converted to polystyrene of 5.0×10³ to 2.0×10⁵ and a bound styrene content of 10 to 70% by mass based on 100 parts by mass of the rubber component.

Furthermore, the pneumatic tire according to the invention is characterized in that the above-described rubber composition is used in a tread.

According to the invention, there can be provided the styrene-based polymer using the styrene derivative as a monomer and having a relatively high molecular weight, a good compatibility with the rubber component and a sufficiently high glass transition point. Also, there can be provided the rubber composition comprising such a styrene-based polymer and having a high tan δ and sufficient fracture characteristics. Furthermore, there can be provided the pneumatic tire using such a rubber composition in the tread and having sufficient fracture characteristics and an excellent steering stability.

The invention will be described in detail below. The rubber composition according to the invention comprises 5 to 150 parts by mass of a styrene-based polymer obtained by homopolymerizing a styrene derivative and having a weight average molecular weight as converted to polystyrene of 2×10³ to 50×10³ , based on 100 parts by mass of a rubber component composed of a diene-based rubber. Since the styrene-based polymer has a high glass transition point, it can improve tan δ of the rubber composition. Also, since the styrene-based polymer has a relatively high molecular weight and a relatively good compatibility with the rubber component, it can sufficiently ensure the fracture resistance of the rubber composition. Therefore, the rubber composition according to the invention comprising the styrene-based polymer has a high tan δ and a sufficient fracture resistance, and the steering stability and the fracture characteristics of the tire can be highly established by using the rubber composition in the tire tread.

As the diene-based rubber used as the rubber component in the rubber composition according to the invention are mentioned natural rubber (NR) and synthetic rubbers such as a copolymer of a conjugated diene compound and an aromatic vinyl compound, e.g. styrene-butadiene copolymer rubber (SBR), styrene-isoprene copolymer rubber (SIR) or the like, a homopolymer of a conjugated diene compound, e.g. polyisoprene rubber (IR), polybutadiene rubber (BR) or the like, butyl rubber (IIR), ethylene-propylene copolymer, a mixture thereof and so on. Moreover, there may be used a diene-based rubber having a branch structure, in which a part thereof is modified with a polyfunctional modifying agent such as tin tetrachloride or the like. These diene-based rubbers may be used alone or in a blend of two or more.

Among the diene-based rubbers, the conjugated diene compound-aromatic vinyl compound copolymer is preferable and SBR is particularly preferable in view of compatibility of commonly available ones. Moreover, the conjugated diene compound-aromatic vinyl compound copolymer is preferable to have a weight average molecular weight as converted to polystyrene of 300×10³ to 3,000×10³. When the conjugated diene compound-aromatic vinyl compound copolymer having a weight average molecular weight of less than 300×10³ is used, the fracture characteristics of the rubber composition tend to be lowered, while the conjugated diene compound-aromatic vinyl compound copolymer having a weight average molecular weight of more than 3,000×10³ has poor productivity because viscosity of a polymerization solution becomes high. When SBR is used as the rubber component, it may be blended with NR, BR and the like, but it is preferable that the content of SBR in the rubber component is not less than 40% by mass.

The styrene-based polymer used in the rubber composition of the invention is obtained by homopolymerizing the styrene derivative and has a weight average molecular weight as converted to polystyrene of 2×10³ to 50×10³. When the weight average molecular weight of the styrene-based polymer is less than 2×10³, the fracture characteristics of the rubber composition tend to be lowered, while when it exceeds 50×10³, the processability of the rubber composition tends to be deteriorated. Moreover, the performances of the tread become best by compounding the styrene-based polymer having the weight average molecular weight as converted to polystyrene of 5×10³ to 50×10³ into the rubber composition and using such a rubber composition in the tread, although they are dependent upon the purpose.

The styrene-based polymer preferably has a glass transition point of not lower than 70°C. When the styrene-based (co)polymer having a glass transition point of not lower than 70°C is compounded into the rubber composition, the tan δ of the rubber composition can be improved sufficiently.

The styrene-based copolymer is preferably obtained by random copolymerization. The bound styrene content in the styrene-based copolymer is preferably not more than 90% by mass, more preferably not more than 50% by mass.

The styrene derivative as a starting monomer of the styrene-based polymer is a derivative obtained by substituting a hydrogen in a styrene molecule with a monovalent substituent, and comprises a derivative obtained by the substitution of a hydrogen in a benzene ring of the styrene molecule. The styrene derivative is obtained through the substitution of the hydrogen in the benzene ring of the styrene molecule and is preferably a derivative having a substituent at a para-position against the vinyl group. The monovalent substituent is an alkyl group such as methyl group, ethyl group, propyl group, isobutyl group, tert-butyl group or the like. The styrene derivative has an alkyl group with a carbon number of 1 to 12 as a substituent in the benzene ring , and a styrene derivative having an alkyl group with a carbon number of 1 to 8 as a substituent in the benzene ring is preferable, and a styrene derivative having tert-butyl group as a substituent in the benzene ring is particularly preferable. As the styrene derivative are mentioned alkyl styrenes such as methyl styrene, ethyl styrene, isobutyl styrene, tert-butyl styrene, α-methyl styrene, 2,4,6-trimethyl styrene and the like; cycloalkyl styrenes such as 4-cyclohexyl styrene and the like; and alkenyl styrenes such as divinyl benzene and the like. Among them, p-tert-butyl styrene is particularly preferable.

The styrene-based polymer used in the invention can be produced by a common polymerization method of olefins through anionic polymerization using the styrene derivative as the monomer. When the styrene-based polymer is produced by the anionic polymerization, an organolithium compound is usually used as a polymerization initiator and each monomer is polymerized in an inert organic solvent. Moreover, since the styrene-based copolymer is preferably randomly polymerized as previously mentioned, it is preferable to use a randomizer, if necessary.

As the organolithium compound used as the polymerization initiator are mentioned an alkyl lithium such as ethyl lithium, n-propyl lithium, i-propyl lithium, n-butyl lithium, sec-butyl lithium, tert-octyl lithium, n-decyl lithium or the like; an aryl lithium such as phenyl lithium, 2-naphthyl lithium, 2-butyl-phenyl lithium or the like; an aralkyl lithium such as 4-phenyl-butyl lithium or the like; a cycloalkyl lithium such as cyclohexyl lithium, 4-cyclopentyl lithium or the like; a lithium amide compound such as lithium hexamethylene imide, lithium pyrrolidide, lithium piperidide, lithium heptamethylene imide, lithium dodecamethylene imide, lithium dimethyl amide, lithium diethyl amide, lithium dipropyl amide, lithium dibutyl amide, lithium dihexyl amide, lithium diheptyl amide, lithium dioctyl amide, lithium di-2-ethylhexyl amide, lithium didecyl amide, lithium-N-methyl piperazide, lithium ethyl propyl amide, lithium ethyl butyl amide, lithium methyl butyl amide, lithium ethyl benzyl amide, lithium methyl phenethyl amide or the like; and so on. Among them, n-butyl lithium is preferable. The amount of the organolithium compound used is preferable to be within a range of 0.2 to 20 mmol per 100 g of the monomer.

As the inert organic solvent are mentioned an aliphatic hydrocarbon such as propane, n-butane, i-butane, n-pentane, i-pentane, n-hexane, propene, 1-butene, i-butene, trans-2-butene, cis-2-butene, 1-pentene, 2-pentene, 1-hexene, 2-hexene or the like; an aromatic hydrocarbon such as benzene, toluene, xylene, ethyl benzene or the like; and an alicyclic hydrocarbon such as cyclohexane or the like. Among them, cyclohexane is preferable. These inert organic solvents may be used alone or in a combination of two or more.

As the randomizer are mentioned dimethoxy benzene, tetrahydrofuran, dimethoxy ethane, diethylene glycol dibutyl ether, diethylene glycol dimethyl ether, bis tetrahydrofuryl propane, triethylamine, pyridine, N-methylmorpholine, N,N,N',N'-tetramethylethylenediamine, 1,2-dipiperidinoethane, potassium-t-amylate, potassium-t-butoxide, sodium-t-amylate and so on. The amount of the randomizer used is preferable to be within a range of 0.01 to 20 mole per 1 mole of the organolithium compound as the polymerization initiator.

In the production of the styrene-based polymer, the polymerization temperature is preferably within a range of about -80 to 150°C, more preferably within a range of about -20 to 100°C. Although the polymerization can be performed under a pressure generated, it is commonly preferable to be performed under a pressure enough to maintain the monomer used at substantially a liquid phase. Moreover, the pressure of the polymerization is dependent on raw materials used such as the monomer, the initiator and the like and the polymerization temperature, but the polymerization can be performed under a pressure higher than the pressure generated, if necessary. When the polymerization is performed under a pressure higher than the pressure generated, it is preferable to pressurize the polymerization system with an inert gas. Preferably, water, oxygen, carbon dioxide and other catalyst poisons are previously removed from all raw materials used for polymerization such as the monomer, the polymerization initiator, the solvent and the like.

In the rubber composition of the invention, the amount of the styrene-based polymer compounded is 5 to 150 parts by mass based on 100 parts by mass of the rubber component. When the amount of the styrene-based polymer compounded is less than 5 parts by mass based on 100 parts by mass of the rubber component, the effect of compounding the styrene-based polymer is small and the tan δ of the rubber composition cannot be sufficiently improved, while when it exceeds 150 parts by mass, the breaking strength of the rubber composition is deteriorated.

The rubber composition preferably further contains 10 to 200 parts by mass of a styrene-butadiene copolymer having a weight average molecular weight as converted to polystyrene of 5.0×10³ to 2.0×10⁵ and a bound styrene content of 10 to 70% by mass based on 100 parts by mass of the rubber component. When the styrene-butadiene copolymer having the weight average molecular weight as converted to polystyrene of 5.0×10³ to 2.0×10⁵ and the bound styrene content of 10 to 70% by mass is compounded into the rubber composition, there can be improved the fracture characteristics, wear resistance and steering stability of the tire using such a rubber composition in the tread. When the weight average molecular weight as converted to polystyrene is less than 5.0×10³ or more than 2.0×10⁵, or when the bound styrene content is less than 10% by mass or more than 70% by mass, the steering stability may not be improved sufficiently. Moreover, when the amount of the styrene-butadiene copolymer compounded is less than 10 parts by mass, the effect of improving the steering stability and wear resistance of the tire is small, while when it exceeds 200 parts by mass, the Mooney viscosity of the rubber composition becomes too low and the productivity may be deteriorated. The styrene-butadiene copolymer can be produced according to a usual method by using styrene and 1,3-butadiene as a raw material.

The rubber composition of the invention is preferably compounded with a filler, not particularly limited, but is preferably compounded with carbon black and/or silica.

The silica is not particularly limited, but includes, for example, precipitated silica (hydrous silicate), fumed silica (anhydrous silicate), calcium silicate, aluminium silicate and so on. Among them, the precipitated silica is preferable in that the effect of improving fracture characteristics and the effect of establishing the wet gripping performance and the low rolling resistance are excellent. In the rubber composition of the invention, the silica may be only compounded as the filler. In this case, the amount of the silica compounded is 10 to 250 parts by mass based on 100 parts by mass of the rubber component, and preferably 20 to 150 parts by mass from a viewpoint of the reinforcing property and the improvement efficiency of various characteristics. When the amount of the silica compounded is less than 10 parts by mass based on 100 parts by mass of the rubber component, the fracture characteristics and the like are not sufficient, while when it exceeds 250 parts by mass, the processability of the rubber composition is deteriorated.

When the silica is used as the filler in the rubber composition of the invention, it is preferable that a silane coupling agent is added on compounding in view of further improving the reinforcing property. As the silane coupling agent are mentioned bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxy silane, 3-mercaptopropyltriethoxy silane, 2-mercaptoethyltrimethoxy silane, 2-mercaptoethyltriethoxy silane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropyl benzothiazole tetrasulfide, 3-triethoxysilylpropyl benzothiazole tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyl dimethoxymethyl silane, dimethoxymethylsilylpropyl-N,N-dimethylthiocarbamoyl tetrasulfide, dimethoxymethylsilylpropyl benzothiazole tetrasulfide and the like. Among them, bis(3-triethoxysilylpropyl) tetrasulfide and 3-trimethoxysilylpropyl benzothiazole tetrasulfide are preferable from a viewpoint of the effect of improving the reinforcing property. These silane coupling agents may be used alone or in a combination of two or more.

On the other hand, the carbon black is not particularly limited, but includes FEF, SRF, HAF, ISAF and SAF grade ones and the like. The carbon black preferably has an iodine adsorption number (IA) of not less than 60 mg/g and a dibutylphthalate (DBP) adsorption number of not less than 80 mL/100g. Although the various characteristics of the rubber composition can be improved by compounding the carbon black, the carbon blacks are more preferably HAF, ISAF and SAF grade carbon blacks in view of improving the wear resistance. In the rubber composition of the invention, the carbon black may be only compounded as the filler. In this case, the amount of the carbon black compounded is 10 to 250 parts by mass based on 100 parts by mass of the rubber component, and preferably 20 to 150 parts by mass from a viewpoint of the reinforcing property and the improvement efficiency of various characteristics. When the amount of the carbon black compounded is less than 10 parts by mass based on 100 parts by mass of the rubber component, the fracture characteristics and the like are not sufficient, while when it exceeds 250 parts by mass, the processability of the rubber composition is deteriorated.

A common crosslinking system for a rubber can be used in the rubber composition of the invention, and a combination of a crosslinking agent and a vulcanization accelerator is preferably used. As the crosslinking agent are mentioned sulfur and the like. The amount of the crosslinking agent used is preferable to be within a range of 0.1 to 10 parts by mass as a sulfur content, and more preferable to be within a range of 1 to 5 parts by mass based on 100 parts by mass of the rubber component. When the amount of the crosslinking agent compounded is 0.1 part by mass as the sulfur content based on 100 parts by mass of the rubber component, the breaking strength, wear resistance and low heat build-up of the resulting vulcanized rubber are deteriorated, while when it exceeds 10 parts by mass, the rubber elasticity is lost.

On the other hand, the vulcanization accelerator is not particularly limited, but includes a thiazole-based vulcanization accelerator such as 2-mercaptobenzothiazole (M), dibenzothiazyl disulfide (DM), N-cyclohexyl-2-benzothiazyl sulfenamide (CZ), N-t-butyl-2-benzothiazolyl sulfenamide (NS) or the like; a guanidine-based vulcanization accelerator such as diphenyl guanidine (DPG) or the like; and so on. The amount of the vulcanization accelerator used is preferably within a range of 0.1 to 5 parts by mass, more preferably within a range of 0.2 to 3 parts by mass based on 100 parts by mass of the rubber component. These vulcanization accelerators may be used alone or in a combination of two or more.

A processing oil or the like can be used as a softener in the rubber composition of the invention. As the processing oil are mentioned a paraffinic oil, a naphthenic oil, an aromatic oil and the like. Among them, the aromatic oil is preferable in view of the tensile strength and wear resistance, and the naphthenic oil and the paraffinic oil are preferable in view of the hysteresis loss and low-temperature characteristics. The amount of the processing oil used is preferable to be within a range of 0 to 100 parts by mass based on 100 parts by mass of the rubber component. When the amount of the processing oil used exceeds 100 parts by mass based on 100 parts by mass of the rubber component, the tensile strength and low heat build-up of the vulcanized rubber tend to be deteriorated.

In the rubber composition of the invention can be compounded additives usually used in the rubber industry such as an anti-aging agent, zinc oxide, stearic acid, an antioxidant, an antiozonant and the like within amounts not damaging the object of the invention in addition to the rubber component, the styrene-based polymer, the filler such as carbon black, silica or the like, the silane coupling agent, the crosslinking agent, the vulcanization accelerator and the softener.

The rubber composition of the invention is obtained by milling with a milling machine such as rolls, an internal mixer or the like, which can be shaped and vulcanized for use in a tire tread.

The pneumatic tire according to the invention is characterized by using the above rubber composition in a tread. The tire has an excellent steering stability and a good fracture resistance because the aforementioned rubber composition having a high tan δ and good fracture characteristics is applied to the tread of the tire. The pneumatic tire according to the invention is not particularly limited as far as the above rubber composition is used for the tread, and can be produced by the usual method. Moreover, as a gas filled into the tire can be used usual air or air having a regulated partial oxygen pressure but also inert gases such as nitrogen, argon, helium and so on.

## Claims

1. A rubber composition for a tread for a tire comprising 5 to 150 parts by mass of a styrene-based polymer obtained by homopolymerizing a styrene derivative through an anionic polymerization based on 100 parts by mass of a rubber component composed of a diene-based rubber, **characterized in that** the styrene-based polymer has a weight average molecular weight as converted to polystyrene of 2x10³ to 50x10³, and the styrene derivative has an alkyl group having a carbon number of 1 to 12 as a substituent in a benzene ring.

2. A rubber composition for a tread as claimed in claim 1, wherein the styrene derivative has an alkyl group having a carbon number of 1 to 8 as a substituent in the benzene ring.

3. A rubber composition for a tread as claimed in claim 2, wherein the styrene derivative has tert-butyl group as a substituent in the benzene ring.

4. A rubber composition for a tread as claimed in any of claims 1 to 3, wherein the rubber component comprises a copolymer of a conjugated diene compound and an aromatic vinyl compound having a weight average molecular weight as converted to polystyrene of 300x10³ to 3,000x10³.

5. A rubber composition for a tread as claimed in claim 4, wherein the copolymer of the conjugated diene compound and the aromatic vinyl compound is a styrene-butadiene copolymer rubber.

6. A rubber composition for a tread as claimed in claim 1, which comprises 10 to 200 parts by mass of a styrene-butadiene copolymer having a weight average molecular weight as converted to polystyrene of 2.0x10³ to 2.0x10⁵ and a bound styrene content of 10 to 70% by mass based on 100 parts by mass of the rubber component.

7. A rubber composition for a tread as claimed in any of claims 1 to 6, which further comprises a crosslinking agent and a vulcanization accelerator.

8. A rubber composition for a tread as claimed in any of claims 1 to 7, which further comprises a filler.

9. A pneumatic tire, **characterized in that** a rubber composition as claimed in any of claims 1 to 8 is used in a tread.

## Patentansprüche

1. Kautschukzusammensetzung für eine Lauffläche für einen Reifen, umfassend 5 bis 150 Massenteile eines Polymers auf Styrolbasis, das durch Homopolymerisieren eines Styrolderivats durch eine anionische Polymerisation erhalten worden ist, auf 100 Massenteilen einer Kautschukkomponente bezogen, die aus einem Kautschuk auf Dienbasis besteht, **dadurch gekennzeichnet, dass** das Polymer auf Styrolbasis ein gewichtsdurchschnittliches Molekulargewicht, wie zu Polystyrol umgewandelt, von 2x10³ bis 50x10³ aufweist und das Styrolderivat eine Alkylgruppe, die eine Kohlenstoffzahl von 1 bis 12 aufweist, als Substituent in einem Benzolring aufweist.

2. Kautschukzusammensetzung für eine Lauffläche nach Anspruch 1, wobei das Styrolderivat eine Alkylgruppe, die eine Kohlenstoffzahl von 1 bis 8 aufweist, als Substituent im Benzolring aufweist.

3. Kautschukzusammensetzung für eine Lauffläche nach Anspruch 2, wobei das Styrolderivat eine tert.-Butylgruppe als Substituent im Benzolring aufweist.

4. Kautschukzusammensetzung für eine Lauffläche nach einem der Ansprüche 1 bis 3, wobei die Kautschukkomponente ein Copolymer einer konjugierten Dienverbindung und eine aromatische Vinylverbindung umfasst, die ein gewichtsdurchschnittliches Molekulargewicht, wie zu Polystyrol umgewandelt, von 300x10³ bis 3.000x10³ aufweist.

5. Kautschukzusammensetzung für eine Lauffläche nach Anspruch 4, wobei das Copolymer der konjugierten Dienverbindung und der aromatischen Vinylverbindung ein Styrol-Butadien-Copolymer-Kautschuk ist.

6. Kautschukzusammensetzung für eine Lauffläche nach Anspruch 1, die 10 bis 200 Massenteile eines Styrol-Butadien-Copolymers umfasst, das ein gewichtsdurchschnittliches Molekulargewicht, wie zu Polystyrol umgewandelt, von 5,0x10³ bis 2,0x10⁵ und einen Gehalt an gebundenem Styrol von 10 bis 70 Masse-%, auf 100 Massenteile der Kautschukkomponente bezogen, aufweist.

7. Kautschukzusammensetzung für eine Lauffläche nach einem der Ansprüche 1 bis 6, die des Weiteren ein Vernetzungsmittel und einen Vulkanisationsbeschleuniger umfasst.

8. Kautschukzusammensetzung für eine Lauffläche nach einem der Ansprüche 1 bis 7, die des Weiteren einen Füllstoff umfasst.

9. Luftreifen, **dadurch gekennzeichnet, dass** eine Kautschukzusammensetzung nach einem der Ansprüche 1 bis 8 in einer Lauffläche verwendet wird.

## Revendications

1. Composition de caoutchouc pour une bande de roulement pour un pneumatique comprenant de 5 à 150 parties en masse d'un polymère à base de styrène obtenu par une homopolymérisation d'un dérivé de styrène par une polymérisation anionique sur la base de 100 parties en masse d'un composant de caoutchouc composé d'un caoutchouc à base de diène, **caractérisée en ce que** le polymère à base de styrène possède un poids moléculaire moyen en poids comme il est converti en polystyrène de 2 x 10³ à 50 x 10³ et le dérivé de styrène possède un groupe alkyle ayant un nombre de carbones de 1 à 12 en tant que substituant dans un cycle de benzène.

2. Composition de caoutchouc pour une bande de roulement selon la revendication 1, dans laquelle le dérivé de styrène possède un groupe alkyle ayant un nombre de carbones de 1 à 8 en tant que substituant dans le cycle de benzène.

3. Composition de caoutchouc pour une bande de roulement selon la revendication 2, dans laquelle le dérivé de styrène possède un groupe ter-butyle en tant que substituant dans le cycle de benzène.

4. Composition de caoutchouc pour une bande de roulement selon l'une quelconque des revendications 1 à 3, dans laquelle le composant de caoutchouc comprend un copolymère d'un composé de diène conjugué et d'un composé de vinyle aromatique possédant un poids moléculaire moyen en poids comme il est converti en polystyrène de 300 x 10³ à 3.000 x 10³.

5. Composition de caoutchouc pour une bande de roulement selon la revendication 4, dans laquelle le copolymère du composé de diène conjugué et du composé de vinyle aromatique est un caoutchouc de copolymère de styrène-butadiène.

6. Composition de caoutchouc pour une bande de roulement selon la revendication 1, qui comprend de 10 à 200 parties en masse d'un copolymère de styrène-butadiène possédant un poids moléculaire moyen en poids comme il est converti en polystyrène de 5,0 x 10³ à 2,0 x 10⁵ et une teneur en styrène lié de 10 à 70% en masse sur la base de 100 parties en masse du composant de caoutchouc.

7. Composition de caoutchouc pour une bande de roulement selon l'une quelconque des revendications 1 à 6, qui comprend en outre un agent de réticulation et un accélérateur de vulcanisation.

8. Composition de caoutchouc pour une bande de roulement selon l'une quelconque des revendications 1 à 7, qui comprend en outre une charge.

9. Pneumatique, **caractérisé en ce qu'**une composition de caoutchouc selon l'une quelconque des revendications 1 à 8 est utilisée dans une bande de roulement.
